# EUROPEAN PATENT APPLICATION

(11) **EP 4 831 021 A1**
(43) Date of publication of application: **28.10.2026**
(21) Application number: 26174803.2
(22) Date of filing: 27.04.2026
(51) Int. Cl.: B60T 13/74, F16D 121/24

(54) **ELECTRO-MECHANICAL BRAKE APPARATUS AND VEHICLE**

(30) Priority: 27.04.2025 CN 202510541250
(71) Applicant: HUAWEI TECHNOLOGIES CO., LTD., Shenzhen 518129 (CN)
(72) Inventor: ZHANG, Weilong, Shenzhen, 518129 (CN); WEI, Lishun, Shenzhen, 518129 (CN)
(74) Representative: Gill Jennings & Every LLP

(57) **Abstract**

This application provides an electro-mechanical brake apparatus and a vehicle. The electro-mechanical brake apparatus includes a brake motor, a motor controller, a transmission gear assembly, and a brake pad. The brake motor, the motor controller, and the transmission gear assembly are arranged in different cavities. The motor controller is configured to control a motor shaft of the brake motor to rotate, and drive, through the transmission gear assembly, the brake pad to apply braking. Along an axial direction of the motor shaft, the motor controller and the transmission gear assembly are arranged on a same side of a stator of the brake motor, the motor controller includes a first circuit board and a second circuit board, the first circuit board is spaced from the motor shaft, and the second circuit board is arranged between the first circuit board and the stator. Along a radial direction of the motor shaft, the first circuit board is spaced from the transmission gear assembly, and the second circuit board is spaced from the transmission gear assembly and the motor shaft. In the electro-mechanical brake apparatus provided in this application, circuit boards are stacked in lateral space of the motor shaft, thereby reducing overall area overheads and overall dimensions.

## Description

### TECHNICAL FIELD

This application relates to the field of vehicle technologies, and specifically, to an electro-mechanical brake apparatus and a vehicle.

### BACKGROUND

An electro-mechanical brake apparatus is configured to drive a brake pad to apply braking to a brake disc. Due to a limited size of wheel-end space of a vehicle, a volume of the electro-mechanical brake apparatus needs to be reduced to avoid interference between the electro-mechanical brake apparatus and a steering system or a suspension system of the vehicle.

### SUMMARY

This application provides an electro-mechanical brake apparatus and a vehicle. In the electro-mechanical brake apparatus, circuit boards are stacked in lateral space of a motor shaft, thereby reducing overall area overheads and overall dimensions of the electro-mechanical brake apparatus.

According to a first aspect, this application provides an electro-mechanical brake apparatus. The electro-mechanical brake apparatus includes a brake motor, a motor controller, a transmission gear assembly, and a brake pad. The brake motor, the motor controller, and the transmission gear assembly are arranged in different cavities of the electro-mechanical brake apparatus. The motor controller is configured to control a motor shaft of the brake motor to rotate, and the motor shaft is configured to drive, through the transmission gear assembly, the brake pad to apply braking. Along an axial direction of the motor shaft, the motor controller and the transmission gear assembly are arranged on a same side of a stator of the brake motor, the motor controller includes a first circuit board and a second circuit board, the first circuit board is spaced from the motor shaft, and the second circuit board is arranged between the first circuit board and the stator. Along a radial direction of the motor shaft, the first circuit board is spaced from the transmission gear assembly, and the second circuit board is spaced from the transmission gear assembly and the motor shaft.

A plurality of cavities are included in a housing of the electro-mechanical brake apparatus provided in this application, and the brake motor, the motor controller, and the transmission gear assembly are distributed in different cavities. A cavity for the motor controller and a cavity for the transmission gear assembly are located on a same side of a cavity for the brake motor along the axial direction of the motor shaft, and the cavity for the motor controller and the cavity for the transmission gear assembly are further spaced apart along the radial direction of the motor shaft.

The motor controller includes the first circuit board and the second circuit board. The first circuit board and the second circuit board are stacked in the cavity for the motor controller. The first circuit board is spaced from the motor shaft along the axial direction of the motor shaft, and the second circuit board is arranged between the first circuit board and the stator of the brake motor along the axial direction of the motor shaft. The first circuit board is configured to avoid the transmission gear assembly, and the second circuit board is configured to avoid the transmission gear assembly and the motor shaft, so that the motor shaft is engaged with the transmission gear assembly for transmission.

In the electro-mechanical brake apparatus provided in this application, the motor controller is arranged in lateral space that is of the motor shaft and that is away from the transmission gear assembly, and the circuit boards are stacked, thereby reducing an overall area of the motor controller and properly using the lateral space of the motor shaft. As a result, an internal structure of the electro-mechanical brake apparatus is more compact, and overall dimensions of the electro-mechanical brake apparatus are reduced.

In an implementation, the electro-mechanical brake apparatus includes the housing and a cover plate, the housing and the cover plate enclose an accommodation cavity, and the accommodation cavity is configured to accommodate the motor controller and the transmission gear assembly. The housing is configured to fasten a spacer, and the spacer is configured to divide the accommodation cavity into a cavity for the motor controller and a cavity for the transmission gear assembly. Along the axial direction of the motor shaft, the stator, the second circuit board, the first circuit board, and the cover plate are sequentially spaced apart, and a section of the motor shaft is configured to extend into the cavity for the transmission gear assembly, and is configured to be in transmission connection with the transmission gear assembly.

In this implementation, in the electro-mechanical brake apparatus, the housing and the cover plate form the accommodation cavity to accommodate the motor controller and the transmission gear assembly, and the spacer in the housing separates the cavity for the motor controller from the cavity for the transmission gear assembly. This allows the motor shaft of the brake motor to extend into the cavity for the transmission gear assembly to engage with the transmission gear assembly for transmission. The spacer is configured to block lubricating grease or lubricating oil in the cavity for the transmission gear assembly from flowing to the motor controller.

In an implementation, the spacer includes a flange. Along the axial direction of the motor shaft, the flange is fastened in the accommodation cavity and extends toward the cover plate, and a middle part of the flange is configured to be fastened in a gap between the first circuit board and the motor shaft. Along the radial direction of the motor shaft, an upper part of the flange is configured to be fastened in a gap between the first circuit board and the transmission gear assembly, and a lower part of the flange is configured to be fastened in a gap between the second circuit board and the motor shaft.

In this implementation, there is a gap between the motor shaft and the cover plate along the axial direction of the motor shaft, and the first circuit board extends into the gap between the motor shaft and the cover plate to achieve a larger area. Accordingly, planar shapes of the first circuit board and the second circuit board are different. The upper part and the lower part of the flange are set to different shapes along the axial direction of the motor shaft, so that the upper part and the lower part of the flange respectively match the first circuit board and the second circuit board. In this way, the accommodation cavity is divided into the cavity for the motor controller and the cavity for the transmission gear assembly.

In an implementation, the upper part of the flange includes an oil baffle. Along the axial direction of the motor shaft, the oil baffle is fastened to a side that is of the flange and that faces the cover plate. Along the radial direction of the motor shaft, the oil baffle is in a U-shape, and a U-shaped notch of the oil baffle is oriented toward the transmission gear assembly.

In this implementation, there is a gap between the motor shaft and the first circuit board along the axial direction of the motor shaft, and the oil baffle is configured to extend into the gap between the motor shaft and the first circuit board to separate the cavity for the motor controller from the cavity for the transmission gear assembly. The oil baffle further extends toward the cover plate and forms a partial structure of the upper part of the flange. The U-shape of the oil baffle is used to separate the first circuit board from a gear of the transmission gear assembly.

In an implementation, the electro-mechanical brake apparatus includes a signal terminal, and the signal terminal is configured to electrically connect to each of the first circuit board and the second circuit board. The signal terminal is fastened to an outer surface of a side wall of the housing, and the first circuit board, the transmission gear assembly, and the signal terminal are sequentially spaced apart along the radial direction of the motor shaft.

In this implementation, along the radial direction of the motor shaft, the first circuit board and the signal terminal are respectively arranged on two sides of the transmission gear assembly, and a spacing between the motor controller and the signal terminal is relatively large. This can avoid electromagnetic interference between the motor controller and the signal terminal, thereby ensuring that the motor controller and the signal terminal each work properly.

In an implementation, a first pin assembly and a second pin assembly are fastened to a bottom wall of the accommodation cavity, the first pin assembly and the second pin assembly each extend along the axial direction of the motor shaft, the first pin assembly is configured to connect the first circuit board to the signal terminal, and the second pin assembly is configured to connect the second circuit board to the signal terminal. Along a direction perpendicular to the direction along which the first circuit board and the signal terminal are arranged, the first pin assembly and the second pin assembly are respectively arranged on two sides of the motor shaft. Along the radial direction of the motor shaft, the first pin assembly is spaced from the second circuit board.

In this implementation, the signal terminal may be connected to each of the first pin assembly and the second pin assembly through a line fastened to the housing, and may be connected to the first circuit board and the second circuit board through the first pin assembly and the second pin assembly respectively. A signal trace on the first circuit board and a signal trace on the second circuit board are isolated from each other, to ensure implementation of respective functions of the first circuit board and the second circuit board. The first pin assembly and the second pin assembly are fastened to the bottom wall of the accommodation cavity and are close to the second circuit board. The first pin assembly extends upward from an area beside the second circuit board and is connected to the first circuit board, so that a short circuit caused by contact between the first pin assembly and the second circuit board can be avoided.

In an implementation, a plurality of bus capacitors are fastened to the second circuit board. Along the axial direction of the motor shaft, the plurality of bus capacitors are located on a side that is of the second circuit board and that faces the first circuit board. A height of the bus capacitor is greater than a spacing between the first circuit board and the second circuit board. Along the radial direction of the motor shaft, the plurality of bus capacitors, the second pin assembly, and the signal terminal are sequentially arranged, and the plurality of bus capacitors are spaced from the first circuit board.

In this implementation, the bus capacitors are spaced from the first circuit board along the radial direction of the motor shaft. This further reduces a spacing between the first circuit board and the second circuit board along the axial direction of the motor shaft, reduces a size of the motor controller along the axial direction of the motor shaft, and makes the internal structure of the electro-mechanical brake apparatus more compact.

In an implementation, the housing is made of an insulation material, and the housing, the signal terminal, the first pin assembly, and the second pin assembly are integrally formed.

In this implementation, the signal terminal, the first pin assembly, the second pin assembly, and traces for respective connections are all made of a metal material. The foregoing components made of the metal material may be embedded in the housing made of the insulation material, and are integrally formed with the housing through injection molding. This makes the structure of the electro-mechanical brake apparatus more compact and facilitates assembly.

In an implementation, a magnetic ring is fastened to an end that is of the motor shaft and that faces the first circuit board. Along the axial direction of the motor shaft, the magnetic ring extends into the cavity for the motor controller. A sensing chip of a position sensor is fastened to the first circuit board. A projection of the magnetic ring on the first circuit board partially overlaps with the sensing chip.

In this implementation, because the first circuit board is spaced from the motor shaft along the axial direction of the motor shaft, the sensing chip of the position sensor may be integrated on the first circuit board to monitor a rotation speed of the magnetic ring driven by the motor shaft, thereby enabling the motor controller to monitor a rotation speed of the brake motor. As a result, the motor controller can achieve closed-loop control of the brake motor, which improves reliability of the electro-mechanical brake apparatus in this application.

In an implementation, the first circuit board includes a plurality of control signal receptacles, the first pin assembly is inserted into the plurality of control signal receptacles, and the first circuit board is configured to transmit a control signal to the insertion terminal through the first pin assembly.

In an implementation, the second circuit board includes a plurality of drive signal receptacles, the second pin assembly is inserted into the plurality of drive signal receptacles, and the second circuit board is configured to receive an external drive instruction through the second pin assembly.

In an implementation, the second circuit board includes a three-phase copper busbar receptacle, and a three-phase copper busbar of the brake motor is configured to be inserted into the three-phase copper busbar receptacle. Along the axial direction of the motor shaft, the three-phase copper busbar receptacle runs through the second circuit board, and a length of the three-phase copper busbar is greater than a spacing between the second circuit board and the stator. Along a circumferential direction of the motor shaft, the three-phase copper busbar receptacle is spaced from the bus capacitors, and three receptacles in the three-phase copper busbar receptacle are sequentially spaced apart.

In this implementation, the second circuit board is closer to the stator of the brake motor along the axial direction of the motor shaft, and the three-phase copper busbar of the brake motor is configured to be inserted into the second circuit board and receive a drive signal of the motor controller. The three-phase copper busbar is close to the bus capacitor along the circumferential direction of the motor shaft, and three copper busbars in the three-phase copper busbar are spaced apart along the circumferential direction of the motor shaft. This can shorten a transmission path between the three-phase copper busbar and the bus capacitor, and make proper use of planar space of the second circuit board. As a result, a layout of the second circuit board is more compact and a size of the electro-mechanical brake apparatus provided in this application along the radial direction of the motor shaft is reduced.

In an implementation, the housing is connected to the cover plate through a snap-fit, and a gap between the housing and the cover plate along the axial direction of the motor shaft is filled with a sealant.

In this implementation, a connection structure between the housing and the cover plate eliminates a need for a separate fastener, making the connection structure relatively simple and facilitating miniaturization of the housing. The sealant is configured to seal the accommodation cavity, providing reliable protection for the motor controller and the transmission gear assembly.

In an implementation, the electro-mechanical brake apparatus includes a base plate. The base plate and the housing are an integrated structure.

In an implementation, the electro-mechanical brake apparatus includes a base plate. The base plate is connected to the housing through a snap-fit, and a gap between the base plate and the housing along the axial direction of the motor shaft is filled with a sealant.

In the foregoing two implementations, the base plate and a side plate in the housing may be an integrated structure, or may be separately manufactured. When the base plate and the side plate are separately manufactured, a connection structure between the base plate and the side plate may also take the form of snap-fit to reduce a volume, and the sealant may be used to enhance sealing protection.

In an implementation, the electro-mechanical brake apparatus includes a caliper, the caliper is configured to accommodate a screw nut, the caliper is fastened to the base plate, and the transmission gear assembly is configured to drive the brake pad through the screw nut. Along the axial direction of the motor shaft, the caliper is located on a side that is of the housing and that faces the stator. Along the radial direction of the motor shaft, the screw nut is spaced from the stator.

In this implementation, the transmission gear assembly drives, through the screw nut, the brake pad to apply braking. Along the axial direction of the motor shaft, the caliper and the brake motor are arranged on a same side of the housing, so that a size of the electro-mechanical brake apparatus can be reduced. This makes a structure of the electro-mechanical brake apparatus more compact, and facilitates miniaturization.

In an implementation, the base plate includes an axially protruding structure. The axially protruding structure is configured to protrude away from the cover plate along the axial direction of the motor shaft. An inner cavity of the axially protruding structure is configured to accommodate the stator and a rotor that are of the brake motor.

In an implementation, the caliper includes a motor accommodation cavity, and the motor accommodation cavity is configured to accommodate the stator and a rotor that are of the brake motor.

In the foregoing two implementations, in the electro-mechanical brake apparatus, a cavity for accommodating the brake motor may be formed by using the axially protruding structure of the base plate or by using a caliper. Each of the two implementations can ensure a relative position between the brake motor and the housing, and enable the motor shaft to extend into the cavity for the transmission gear assembly to output a braking force.

In an implementation, the transmission gear assembly includes an output shaft. The output shaft is configured to: pass through the base plate along the axial direction of the motor shaft, and extend into the caliper to be in transmission connection with the screw nut. The output shaft is configured to be fastened to an inner ring of a bearing. Along the axial direction of the motor shaft, a part of an outer ring of the bearing is configured to be fastened to the base plate, and another part of the outer ring of the bearing is configured to be fastened to the caliper.

In this implementation, the base plate and the caliper work with each other to jointly fasten the bearing configured to support the output shaft of the transmission gear assembly. In this way, a wall thickness of the base plate or the caliper along the axial direction of the motor shaft can be reduced, and the size of the electro-mechanical brake apparatus provided in this application can be further reduced.

According to a second aspect, this application provides a vehicle. The vehicle includes a wheel and the electro-mechanical brake apparatus provided in any one of the foregoing implementations. The electro-mechanical brake apparatus is fastened to a vehicle frame of the vehicle, and the electro-mechanical brake apparatus is configured to apply braking to a brake disc of the wheel. The vehicle provided in the second aspect of this application uses the foregoing electro-mechanical brake apparatus, resulting in larger wheel-end space of the vehicle and therefore leaving more space for suspension to achieve a larger steering angle.

### BRIEF DESCRIPTION OF DRAWINGS

To describe technical solutions in this application more clearly, the following briefly describes the accompanying drawings for embodiments. It is clear that the accompanying drawings in the following descriptions are merely some embodiments of this application, and a person of ordinary skill in the art may derive other drawings from these accompanying drawings without creative efforts.
FIG. 1 is a diagram of a structure of a vehicle at a wheel according to an embodiment of this application;
FIG. 2 is a diagram of a framework of an electro-mechanical brake apparatus according to an embodiment of this application;
FIG. 3 is a diagram of a framework of an electro-mechanical brake apparatus according to an embodiment of this application;
FIG. 4 is a diagram of a partial structure of an electro-mechanical brake apparatus according to an embodiment of this application;
FIG. 5 is an exploded view of a structure of an electro-mechanical brake apparatus according to an embodiment of this application;
FIG. 6 is a cross-sectional view of a structure of an electro-mechanical brake apparatus according to an embodiment of this application;
FIG. 7 is a diagram of a structure of an electro-mechanical brake apparatus according to an embodiment of this application;
FIG. 8 is an exploded view of a structure of an electro-mechanical brake apparatus according to an embodiment of this application;
FIG. 9 is a cross-sectional view of a structure of an electro-mechanical brake apparatus according to an embodiment of this application;
FIG. 10 is a plan view of a structure of an electro-mechanical brake apparatus according to an embodiment of this application;
FIG. 11 is a plan view of a structure of an electro-mechanical brake apparatus according to an embodiment of this application;
FIG. 12 is a plan view of a structure of an electro-mechanical brake apparatus according to an embodiment of this application;
FIG. 13 is a diagram of a structure of an electro-mechanical brake apparatus according to an embodiment of this application;
FIG. 14 is a diagram of a structure of an electro-mechanical brake apparatus according to an embodiment of this application;
FIG. 15 is a diagram of a structure of an electro-mechanical brake apparatus according to an embodiment of this application;
FIG. 16 is an exploded view of a structure of an electro-mechanical brake apparatus according to an embodiment of this application;
FIG. 17 is an exploded view of a structure of an electro-mechanical brake apparatus according to an embodiment of this application;
FIG. 18 is a plan view of a structure of an electro-mechanical brake apparatus according to an embodiment of this application;
FIG. 19 is a cross-sectional view of a structure of an electro-mechanical brake apparatus according to an embodiment of this application;
FIG. 20 is a cross-sectional view of a structure of an electro-mechanical brake apparatus according to an embodiment of this application; and
FIG. 21 is a cross-sectional view of a structure of an electro-mechanical brake apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

This application provides an electro-mechanical brake apparatus. The electro-mechanical brake apparatus includes a brake motor, a motor controller, a transmission gear assembly, and a brake pad. The brake motor, the motor controller, and the transmission gear assembly are arranged in different cavities of the electro-mechanical brake apparatus. The motor controller is configured to control a motor shaft of the brake motor to rotate, and the motor shaft is configured to drive, through the transmission gear assembly, the brake pad to apply braking. Along an axial direction of the motor shaft, the motor controller and the transmission gear assembly are arranged on a same side of a stator of the brake motor, the motor controller includes a first circuit board and a second circuit board, the first circuit board is spaced from the motor shaft, and the second circuit board is arranged between the first circuit board and the stator. Along a radial direction of the motor shaft, the first circuit board is spaced from the transmission gear assembly, and the second circuit board is spaced from the transmission gear assembly and the motor shaft. In the electro-mechanical brake apparatus provided in this application, the motor controller is arranged in lateral space that is of the motor shaft and that is away from the transmission gear assembly, and the circuit boards are stacked, thereby reducing an overall area of the motor controller. As a result, an internal structure of the electro-mechanical brake apparatus is more compact, and overall dimensions are reduced.

This application provides a vehicle. The vehicle includes a wheel and the electro-mechanical brake apparatus that is also provided in this application. The electro-mechanical brake apparatus is fastened to a vehicle frame of the vehicle, and the electro-mechanical brake apparatus is configured to apply braking to a brake disc of the wheel. The vehicle provided in this application uses the foregoing electro-mechanical brake apparatus, resulting in larger wheel-end space of the vehicle and therefore leaving more space for suspension and steering to achieve a larger steering angle.

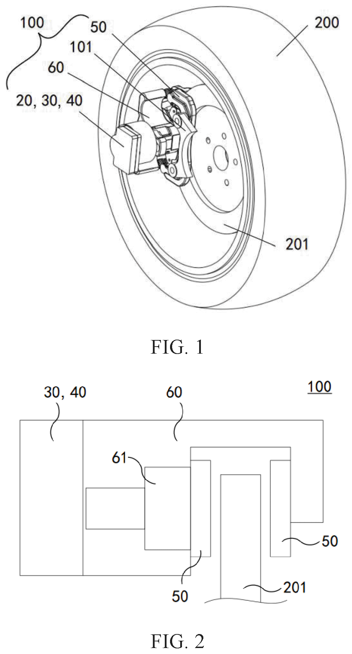

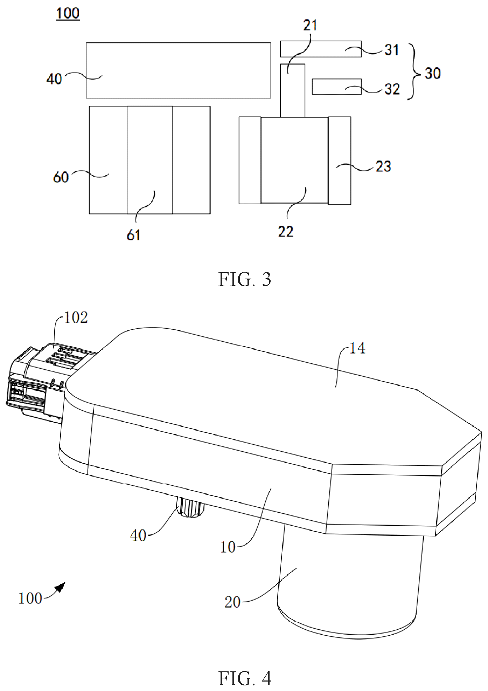

FIG. 1 is a diagram of a structure of a vehicle at a wheel 200 according to an embodiment of this application, FIG. 2 is a diagram of a framework of an electro-mechanical brake apparatus 100 according to an embodiment of this application, and FIG. 3 is a diagram of a framework of the electro-mechanical brake apparatus 100 according to an embodiment of this application.

The vehicle provided in this application includes the wheel 200 and the electro-mechanical brake apparatus 100. The wheel 200 is rotatably connected to a vehicle frame. The wheel 200 includes a brake disc 201. The brake disc 201 is fastened to a wheel hub of the wheel 200. In a traveling process of the vehicle, the brake disc 201 is configured to rotate synchronously with the wheel hub of the wheel 200. The electro-mechanical brake apparatus 100 is the electro-mechanical brake apparatus also provided in embodiments of this application. The electro-mechanical brake apparatus 100 is fastened to the vehicle frame. The electro-mechanical brake apparatus 100 is configured to come into contact with the brake disc 201 to generate a friction force, thereby restricting rotation of the wheel 200 to apply braking to the vehicle.

The electro-mechanical brake apparatus 100 provided in this application includes a brake motor 20, a motor controller 30, a transmission gear assembly 40, and a brake pad 50. The motor controller 30 is configured to control the brake motor 20 to output a braking force. The transmission gear assembly 40 is configured to receive the braking force and drive the brake pad 50 to apply braking.

In an embodiment, the brake motor 20 includes a motor shaft 21, a stator 22, and a rotor 23. The stator 22 is coaxially sleeved outside the rotor 23. The motor shaft 21 is fastened to the rotor 23. The stator 22 is configured to: receive a drive signal and generate an alternating magnetic field, thereby driving the rotor 23 and the motor shaft 21 to rotate synchronously to output the braking force.

The motor controller 30 is configured to electrically connect to the brake motor 20, and the motor controller 30 is configured to receive an external drive instruction to control the brake motor 20 to output the braking force. The transmission gear assembly 40 is configured to be in transmission connection with the motor shaft 21 of the brake motor 20 and the brake pad 50. The brake motor 20 is configured to drive, through the transmission gear assembly 40, the brake pad 50 to move toward the brake disc 201, so that the brake pad 50 comes into contact with the brake disc 201 to generate a friction force, thereby restricting rotation of the wheel 200 to apply braking to the vehicle.

In an embodiment, two brake pads 50 are arranged on two sides of the brake disc 201, and the brake motor 20 is driven by the motor controller 30 to drive the two brake pads 50 to separately slide toward the brake disc 201 to apply braking to the brake disc 201.

In an embodiment, the electro-mechanical brake apparatus 100 includes a screw nut 61. A lead screw or a nut in the screw nut 61 is configured to be driven by the transmission gear assembly 40 to rotate, and the nut or the lead screw in the screw nut 61 is configured to drive the brake pad 50 to slide toward the brake disc 201.

In an embodiment, the electro-mechanical brake apparatus 100 provided in this application further includes a housing 10 and a caliper 60. The housing 10 is configured to accommodate the motor controller 30 and the transmission gear assembly 40. The caliper 60 is configured to accommodate the screw nut 61. The housing 10 is fastened to the caliper 60. The transmission gear assembly 40 is in transmission connection with the screw nut 61. In an embodiment, the housing 10 is configured to accommodate the stator 22 of the brake motor 20, and the stator 22 of the brake motor 20 is fastened to the housing 10. In an embodiment, the caliper 60 is configured to accommodate the stator 22 of the brake motor 20, and the stator 22 of the brake motor 20 is fastened to the caliper 60.

In an embodiment, the electro-mechanical brake apparatus 100 further includes a caliper bracket 101, and the caliper bracket 101 is fastened to the vehicle frame and is slidably connected to the caliper 60. The caliper bracket 101 is further configured to slidably connect to the two brake pads 50. In a braking process of the vehicle according to this application, power output by the motor shaft 21 of the brake motor 20 is transferred to the two brake pads 50 sequentially through the transmission gear assembly 40 and the screw nut 61, so that the brake pads 50 are driven from both sides to separately slide toward the brake disc 201 to apply braking to the wheel 200.

The electro-mechanical brake apparatus 100 provided in this application includes a plurality of cavities. The brake motor 20, the motor controller 30, and the transmission gear assembly 40 are arranged in different cavities of the electro-mechanical brake apparatus 100. Along an axial direction of the motor shaft 21, the motor controller 30 and the transmission gear assembly 40 are arranged on a same side of the stator 22 of the brake motor 20. Along a radial direction of the motor shaft 21, the motor controller 30 is spaced from the transmission gear assembly 40.

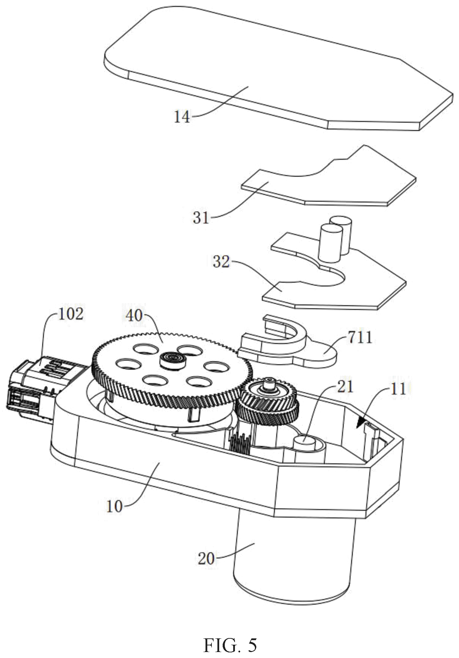

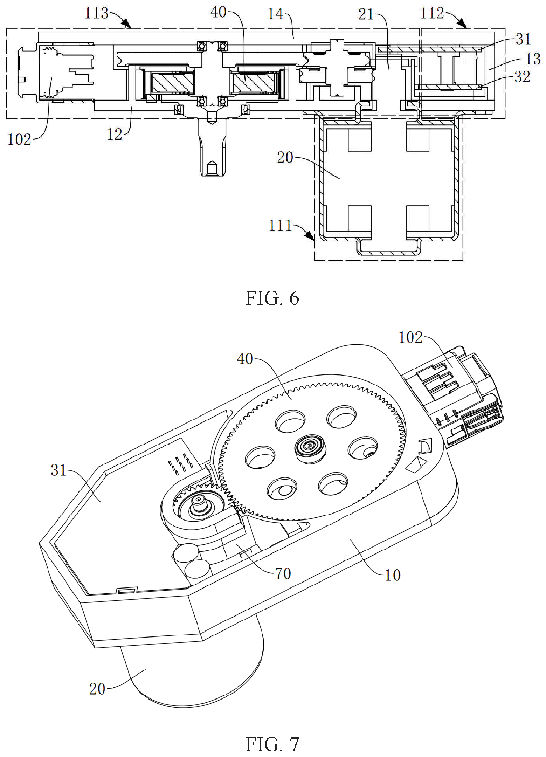

FIG. 4 is a diagram of a partial structure of the electro-mechanical brake apparatus 100 according to an embodiment of this application, FIG. 5 is an exploded view of a structure of the electro-mechanical brake apparatus 100 according to an embodiment of this application, and FIG. 6 is a cross-sectional view of a structure of the electro-mechanical brake apparatus 100 according to an embodiment of this application.

The electro-mechanical brake apparatus 100 includes an accommodation cavity 11. The brake motor 20, the motor controller 30, and the transmission gear assembly 40 are located in the accommodation cavity 11. Specifically, the accommodation cavity 11 includes a first cavity 111, a second cavity 112, and a third cavity 113. The first cavity 111 is arranged on a side of the second cavity 112 and the third cavity 113 along the axial direction of the motor shaft 21, and the second cavity 112 is spaced from the third cavity 113 along the radial direction of the motor shaft 21. The first cavity 111 is configured to accommodate the stator 22, the rotor 23, and one section of the motor shaft 21 that are of the brake motor 20. The second cavity 112 is configured to accommodate the motor controller 30. The third cavity 113 is configured to accommodate the transmission gear assembly 40 and the other section of the motor shaft 21. In other words, along the axial direction of the motor shaft 21, a part of the motor shaft 21 extends into the third cavity 113 and is engaged with a gear of the transmission gear assembly 40 for transmission.

The electro-mechanical brake apparatus 100 includes a cover plate 14. The cover plate 14 is fastened to the housing 10, and the cover plate 14 and the housing 10 enclose the accommodation cavity 11. The housing 10 includes a base plate 12 and a side plate 13. Along the axial direction of the motor shaft 21, the cover plate 14 is spaced from the base plate 12. The cover plate 14 is fastened to the side plate 13, and the cover plate 14 is connected to the base plate 12 through the side plate 13. The cover plate 14 and the base plate 12 each include a plurality of positioning holes. The positioning holes each are configured to fasten a bearing. The bearings are configured to support a transmission shaft of the transmission gear assembly 40 and the motor shaft 21. In the embodiment shown in the figure, the base plate 12 includes an axially protruding structure. The axially protruding structure is configured to protrude away from the cover plate 14 along the axial direction of the motor shaft 21. An inner cavity of the axially protruding structure is configured to form the first cavity 111, to accommodate the stator 22 and the rotor 23 that are of the brake motor 20.

In an embodiment, the axially protruding structure may be a separate structure, and the axially protruding structure is fastened to and detachable from the base plate 12. In other words, the axially protruding structure and the base plate 12 are manufactured separately and assembled into a structure of the housing 10.

In an embodiment, the caliper 60 is fastened to the base plate 12, and along the axial direction of the motor shaft 21, the caliper 60 is located on a side that is of the housing 10 and that faces the stator 22. Along the radial direction of the motor shaft 21, the screw nut 61 is spaced from the stator 22. In other words, along the axial direction of the motor shaft 21, the caliper 60 and the brake motor 20 are arranged on a same side of the housing 10, to reduce a size of the electro-mechanical brake apparatus 100. This makes the structure of the electro-mechanical brake apparatus 100 more compact, and facilitates miniaturization.

In an embodiment, the caliper 60 includes a motor accommodation cavity, and the motor accommodation cavity is configured to accommodate the stator 22 and the rotor 23 that are of the brake motor 20. Similar to the embodiment in which the base plate 12 includes the axially protruding structure, the caliper 60 forming the first cavity 111 for accommodating the brake motor 20 in the electro-mechanical brake apparatus 100 can also ensure a relative position between the brake motor 20 and the housing 10, and enables the motor shaft 21 to extend into the second cavity 112 for the transmission gear assembly 40 to output the braking force.

For the electro-mechanical brake apparatus 100 provided in this application, the motor controller 30 includes a first circuit board 31 and a second circuit board 32. Both the first circuit board 31 and the second circuit board 32 are fastened in the housing 10, and are specifically located in the second cavity 112. Along the axial direction of the motor shaft 21, the first circuit board 31 and the second circuit board 32 are spaced apart. Along the axial direction of the motor shaft 21, the first circuit board 31 is spaced from the motor shaft 21, and the second circuit board 32 is arranged between the first circuit board 31 and the stator 22 of the brake motor 20. Along the radial direction of the motor shaft 21, the second circuit board 32 is spaced from the motor shaft 21.

The motor controller 30 is spaced from the transmission gear assembly 40 along the radial direction of the motor shaft 21. In an embodiment of this application, the first circuit board 31 and the second circuit board 32 each are also spaced from the transmission gear assembly 40 along the radial direction of the motor shaft 21. Therefore, along the radial direction of the motor shaft 21, the first circuit board 31 is spaced from the transmission gear assembly 40, and the second circuit board 32 is spaced from the transmission gear assembly 40 and the motor shaft 21. The first circuit board 31 is configured to avoid the transmission gear assembly 40, and the second circuit board 32 is configured to avoid the transmission gear assembly 40 and the motor shaft 21, so that the motor shaft 21 is engaged with the transmission gear assembly 40 for transmission.

The electro-mechanical brake apparatus 100 provided in this application drives, through the brake motor 20, the transmission gear assembly 40 to output the braking force. The motor shaft 21 is engaged with the gear of the transmission gear assembly 40. Along the radial direction of the motor shaft 21, the transmission gear assembly 40 is arranged on a side of the motor shaft 21. In the electro-mechanical brake apparatus 100 provided in this application, the motor controller 30 is arranged in lateral space that is of the motor shaft 21 and that is away from the transmission gear assembly 40, and the first circuit board 31 and the second circuit board 32 are stacked, thereby reducing an overall area of the motor controller 30. The first circuit board 31 and the second circuit board 32 are respectively equipped with different circuit components to work with each other to implement various functions of the motor controller 30. In the electro-mechanical brake apparatus 100 provided in this application, the lateral space of the motor shaft 21 is properly used, so that an internal structure of the electro-mechanical brake apparatus 100 is more compact and overall dimensions of the electro-mechanical brake apparatus 100 are reduced.

In an embodiment, the accommodation cavity 11 is configured to accommodate the motor controller 30 and the transmission gear assembly 40. The housing 10 is configured to fasten a spacer 70, and the spacer 70 is configured to divide the accommodation cavity 11 into a cavity for the motor controller 30 and a cavity for the transmission gear assembly 40. Along the axial direction of the motor shaft 21, the stator 22, the second circuit board 32, the first circuit board 31, and the cover plate 14 are sequentially spaced apart, and a section of the motor shaft 21 is configured to extend into the cavity for the transmission gear assembly 40 and is configured to be in transmission connection with the transmission gear assembly 40.

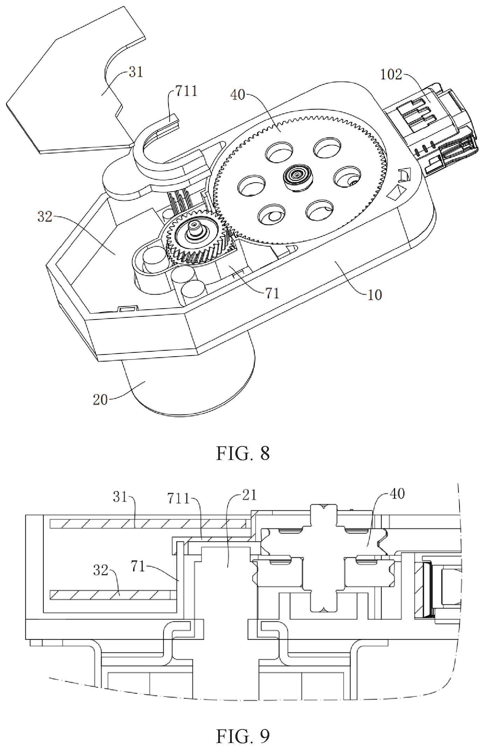

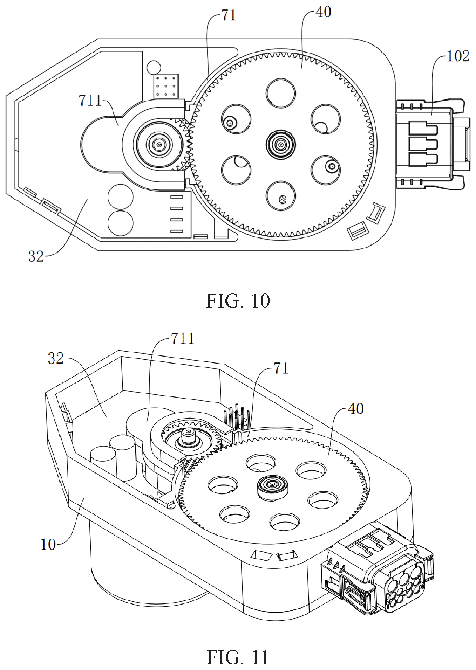

FIG. 7 is a diagram of a structure of the electro-mechanical brake apparatus 100 according to an embodiment of this application, FIG. 8 is an exploded view of a structure of the electro-mechanical brake apparatus 100 according to an embodiment of this application, FIG. 9 is a cross-sectional view of a structure of an electro-mechanical brake apparatus 100 according to an embodiment of this application, and FIG. 10 is a plan view of a structure of the electro-mechanical brake apparatus 100 according to an embodiment of this application.

In this embodiment, the spacer 70 is configured to separate the cavity for the motor controller 30 from the cavity for the transmission gear assembly 40. Specifically, the spacer 70 is configured to separate the second cavity 112 from the third cavity 113. The spacer 70 is configured to block lubricating grease or lubricating oil in the cavity for the transmission gear assembly 40 from flowing to the motor controller 30.

In an embodiment, the spacer 70 includes a flange 71. Along the axial direction of the motor shaft 21, the flange 71 is fastened in the accommodation cavity 11 and extends toward the cover plate 14, and a middle part of the flange 71 is configured to be fastened in a gap between the first circuit board 31 and the motor shaft 21. Along the radial direction of the motor shaft 21, an upper part of the flange 71 is configured to be fastened in a gap between the first circuit board 31 and the transmission gear assembly 40, and a lower part of the flange 71 is configured to be fastened in a gap between the second circuit board 32 and the motor shaft 21.

In this embodiment, there is a gap between the motor shaft 21 and the cover plate 14 along the axial direction of the motor shaft 21. The first circuit board 31 extends into the gap between the motor shaft 21 and the cover plate 14 to achieve a larger area. In other words, along the axial direction of the motor shaft 21, the first circuit board 31 accommodates an orthographic projection of the motor shaft 21. The first circuit board 31 and the motor shaft 21 are respectively located in the second cavity 112 and the third cavity 113, and along the axial direction of the motor shaft 21, a part of space of the second cavity 112 and a part of space of the third cavity 113 are stacked.

Therefore, a middle part of the spacer 70 needs to be fastened in the gap between the first circuit board 31 and the motor shaft 21 along the axial direction of the motor shaft 21, to separate the second cavity 112 and the third cavity 113 that are stacked. An upper part of the spacer 70 is configured to separate the first circuit board 31 from the transmission gear assembly 40, and a lower part of the spacer 70 is configured to: separate the second circuit board 32 from the motor shaft 21, and separate the second circuit board 32 from the transmission gear assembly 40.

In the electro-mechanical brake apparatus 100 provided in this application, planar shapes of the first circuit board 31 and the second circuit board 32 that are stacked are different. The upper part and the lower part of the flange 71 are set to different shapes along the axial direction of the motor shaft 21, so that the upper part and the lower part of the flange 71 respectively match the planar shape of the first circuit board 31 and the planar shape of the second circuit board 32. In this way, the accommodation cavity 11 is divided into the cavity for the motor controller 30 and the cavity for the transmission gear assembly 40. The middle part of the flange 71 is configured to separate a local area of the second cavity 112 and a local area of the third cavity 113 that are stacked.

In an embodiment, the upper part of the flange 71 includes an oil baffle 711. Along the axial direction of the motor shaft 21, the oil baffle 711 is fastened to a side that is of the flange 71 and that faces the cover plate 14. Along the radial direction of the motor shaft 21, the oil baffle 711 is in a U-shape, and a U-shaped notch of the oil baffle 711 is oriented toward the transmission gear assembly 40.

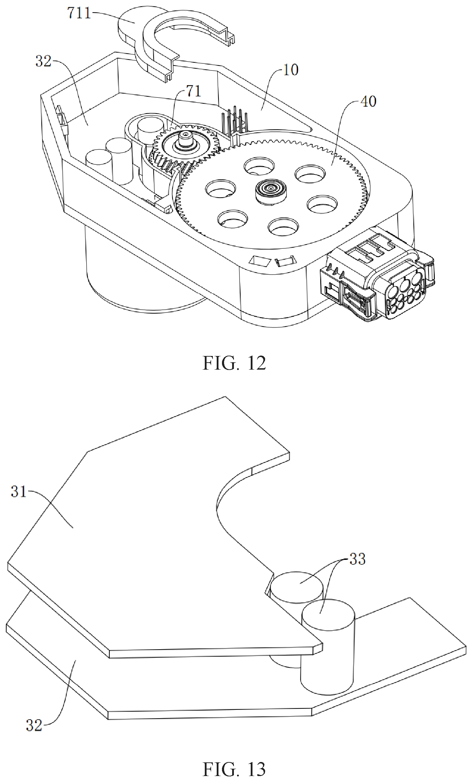

FIG. 11 is a plan view of a structure of the electro-mechanical brake apparatus 100 according to an embodiment of this application, and FIG. 12 is a plan view of a structure of the electro-mechanical brake apparatus 100 according to an embodiment of this application.

In this embodiment, the oil baffle 711 is configured to form at least a structure of the upper part of the flange 71. In the embodiment shown in the figures, the oil baffle 711 is further configured to form a structure of the middle part of the flange 71. The oil baffle 711 is detachably fastened to a structure of the lower part of the flange 71. The oil baffle 711 may simplify a structure of the flange 71, thereby facilitating overall processing of the flange 71.

When the oil baffle 711 is further configured to form the structure of the middle part of the flange 71, there is a gap between the motor shaft 21 and the first circuit board 31 along the axial direction of the motor shaft 21, and the oil baffle 711 is configured to extend into the gap between the motor shaft 21 and the first circuit board 31 to separate the cavity for the motor controller 30 from the cavity for the transmission gear assembly 40. The oil baffle 711 further extends toward the cover plate 14 and forms a partial structure of the upper part of the flange 71. The U-shape of the oil baffle 711 is used to separate the first circuit board 31 from the gear of the transmission gear assembly 40.

In an embodiment, the flange 71 and the housing 10 are an integrated structure.

In an embodiment, a remaining part of the flange 71 excluding the oil baffle 711, and the housing 10 are an integrated structure.

In the foregoing two embodiments, all or a part of the flange 71, and the housing 10 are an integrated structure. This can eliminate a need for a connection piece or a connection structure for fastening the flange 71 to the housing 10, thereby helping reduce a volume of the housing 10 and facilitating miniaturization of the electro-mechanical brake apparatus 100.

In an embodiment, a plurality of bus capacitors 33 are fastened to the second circuit board 32. Along the axial direction of the motor shaft 21, the plurality of bus capacitors 33 are located on a side that is of the second circuit board 32 and that faces the first circuit board 31. A height of the bus capacitor 33 is greater than a spacing between the first circuit board 31 and the second circuit board 32. Along the radial direction of the motor shaft 21, the plurality of bus capacitors 33 are spaced from the first circuit board 31.

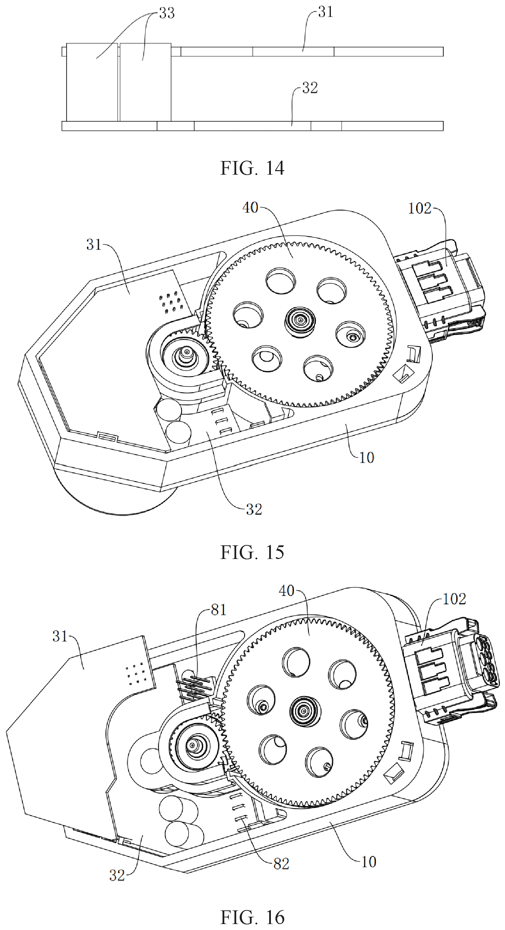

FIG. 13 is a diagram of a structure of the electro-mechanical brake apparatus 100 according to an embodiment of this application, and FIG. 14 is a diagram of a structure of the electro-mechanical brake apparatus 100 according to an embodiment of this application.

In this embodiment, a size of the bus capacitor 33 along the axial direction of the motor shaft 21 is large. If the plurality of bus capacitors 33 are arranged in an axial gap between the first circuit board 31 and the second circuit board 32, a spacing between the first circuit board 31 and the second circuit board 32 along the axial direction of the motor shaft 21 is increased. This increases a size of the motor controller 30 along the axial direction of the motor shaft 21, which may increase the volume of the housing 10, and is not conducive to miniaturization of the electro-mechanical brake apparatus 100. The bus capacitors 33 are spaced from the first circuit board 31 along the radial direction of the motor shaft 21, so that the plurality of bus capacitors 33 fastened to the second circuit board 32 can pass through the first circuit board 31. This reduces the spacing between the first circuit board 31 and the second circuit board 32 along the motor shaft 21, reduces the size of the motor controller 30 along the axial direction of the motor shaft 21, and makes an internal structure of the electro-mechanical brake apparatus 100 more compact.

In an embodiment, the plurality of bus capacitors 33 may be fastened to the first circuit board 31 and located on a side that is of the first circuit board 31 and that faces the second circuit board 32. Along the radial direction of the motor shaft 21, the plurality of bus capacitors 33 are spaced from the second circuit board 32. In other words, the plurality of bus capacitors 33 can pass through the second circuit board 32 from the first circuit board 31. This can also reduce the size of the motor controller 30 along the motor shaft 21, thereby reducing an overall volume of the electro-mechanical brake apparatus 100.

In an embodiment, a magnetic ring is fastened to an end that is of the motor shaft 21 and that faces the first circuit board 31. The magnetic ring extends into the cavity for the motor controller 30 along the axial direction of the motor shaft 21. A sensing chip of a position sensor is fastened to the first circuit board 31. A projection of the magnetic ring on the first circuit board 31 partially overlaps with the sensing chip.

In this embodiment, because the first circuit board 31 is spaced from the motor shaft 21 along the axial direction of the motor shaft 21, and the first circuit board 31 accommodates the orthographic projection of the motor shaft 21 along the axial direction of the motor shaft 21, the sensing chip of the position sensor may be integrated on the first circuit board 31, and the sensing chip is caused to at least partially aligned with the magnetic ring along the axial direction of the motor shaft 21. As a result, the sensing chip can monitor a rotation speed of the magnetic ring driven by the motor shaft 21, thereby enabling the motor controller 30 to monitor a rotation speed of the brake motor 20. As a result, the motor controller 30 can achieve closed-loop control of the brake motor 20, which improves reliability of the electro-mechanical brake apparatus 100 in this application.

In an embodiment, along the axial direction of the motor shaft 21 of the brake motor 20, the motor shaft 21 of the brake motor 20 extends toward the first circuit board 31 and passes through the middle part of the spacer 70, so that the magnetic ring and the sensing chip are aligned without obstruction along the axial direction of the motor shaft 21, thereby ensuring that the sensing chip reliably monitors the rotation speed of the magnetic ring driven by the motor shaft 21.

In an embodiment, the spacer 70 includes a clearance hole. The clearance hole runs through the spacer 70 along the axial direction of the motor shaft 21. Along the axial direction of the motor shaft 21, an end that is of the motor shaft 21 and that is away from the stator 22 extends into the clearance hole. The magnetic ring is fastened to the end that is of the motor shaft 21 and that is away from the stator 22. The sensing chip is fastened to a surface that is of the first circuit board 31 and that faces the spacer 70. A projection of the magnetic ring on the first circuit board 31 is located in the sensing chip.

In an embodiment, along the axial direction of the motor shaft 21, the magnetic ring is located in the clearance hole, to reduce space occupied by the magnetic ring. This reduces a spacing between the first circuit board 31 and the spacer 70, so that the internal structure of the electro-mechanical brake apparatus 100 is more compact, and the size along the axial direction of the motor shaft 21 is smaller.

In an embodiment, the electro-mechanical brake apparatus 100 includes a signal terminal 102, and the signal terminal 102 is configured to electrically connect to each of the first circuit board 31 and the second circuit board 32. The signal terminal 102 is fastened to an outer surface of a side wall of the housing 10, and the first circuit board 31, the transmission gear assembly 40, and the signal terminal 102 are sequentially spaced apart along the radial direction of the motor shaft 21.

FIG. 15 is a diagram of a structure of the electro-mechanical brake apparatus 100 according to an embodiment of this application.

As shown in FIG. 15, along the radial direction of the motor shaft 21, the first circuit board 31 and the signal terminal 102 are respectively arranged on two sides of the transmission gear assembly 40. A size of the transmission gear assembly 40 is large, and a spacing between the motor controller 30 and the signal terminal 102 is accordingly increased. This can avoid electromagnetic interference between the motor controller 30 and the signal terminal 102, thereby ensuring that the motor controller 30 and the signal terminal 102 each work properly.

In an embodiment, a first pin assembly 81 and a second pin assembly 82 are fastened to a bottom wall of the accommodation cavity 11, the first pin assembly 81 and the second pin assembly 82 each extend along the axial direction of the motor shaft 21, the first pin assembly 81 is configured to connect the first circuit board 31 to the signal terminal 102, and the second pin assembly 82 is configured to connect the second circuit board 32 to the signal terminal 102.

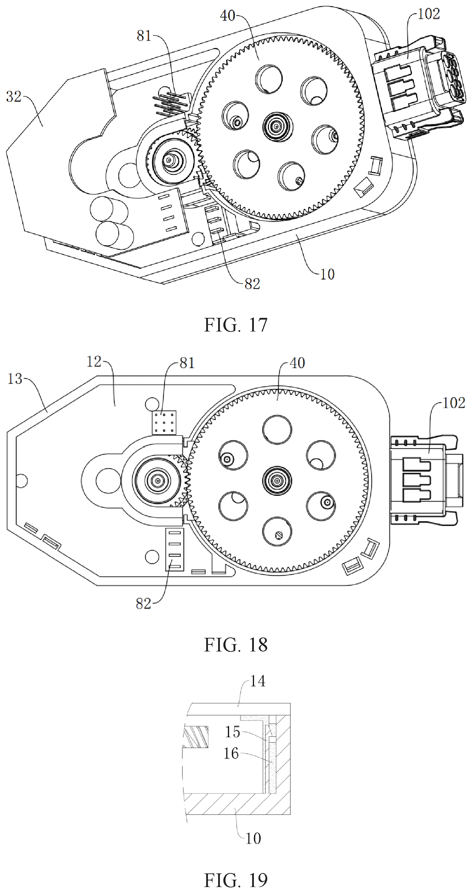

FIG. 16 is an exploded view of a structure of the electro-mechanical brake apparatus 100 according to an embodiment of this application, FIG. 17 is an exploded view of a structure of the electro-mechanical brake apparatus 100 according to an embodiment of this application, and FIG. 18 is a plan view of a structure of the electro-mechanical brake apparatus 100 according to an embodiment of this application.

In this embodiment, the first pin assembly 81 and the second pin assembly 82 each include a plurality of pins. Each pin extends from the bottom wall of the accommodation cavity 11 toward the cover plate 14 along the axial direction of the motor shaft 21. Along the axial direction of the motor shaft 21, a length of the pin of the first pin assembly 81 is greater than a length of the pin of the second pin assembly 82. The pin of the first pin assembly 81 is configured to connect to the first circuit board 31, and the pin of the second pin assembly 82 is configured to connect to the second circuit board 32. Therefore, the signal terminal 102 may be connected to each of the first pin assembly 81 and the second pin assembly 82 through a line fastened to the housing 10, and may be connected to the first circuit board 31 and the second circuit board 32 through the first pin assembly 81 and the second pin assembly 82 respectively. A trace on the first circuit board 31 and a trace on the second circuit board 32 are isolated from each other, to ensure implementation of respective functions of the first circuit board 31 and the second circuit board 32.

In an embodiment, along the radial direction of the motor shaft 21, the first pin assembly 81 is spaced from the second circuit board 32. The first pin assembly 81 and the second pin assembly 82 are fastened to the bottom wall of the accommodation cavity 11 and are close to the second circuit board 32. The first pin assembly 81 extends upward from an area beside the second circuit board 32 and is connected to the first circuit board 31, so that a short circuit caused by contact between the first pin assembly 81 and the second circuit board 32 can be avoided. In other words, the second circuit board 32 includes a clearance notch, and the clearance notch is configured to avoid the first pin assembly 81, and allows the plurality of pins of the first pin assembly 81 to be electrically connected to the first circuit board 31 after passing through the second circuit board 32 along the motor shaft 21.

In an embodiment, along a direction perpendicular to the direction along which the first circuit board 31 and the signal terminal 102 are arranged, the first pin assembly 81 and the second pin assembly 82 are respectively arranged on two sides of the motor shaft 21. The direction along which the first circuit board 31 and the signal terminal 102 are arranged is the direction along which the motor shaft 21 and the transmission gear assembly 40 are arranged, and also the direction along which the second cavity 112 and the third cavity 113 are arranged. In this embodiment of this application, both a main structure of the first circuit board 31 and a main structure of the second circuit board 32 are located on a side of that is the motor shaft 21 and that is away from the transmission gear assembly 40. In this way, the lateral space that is of the motor shaft 21 and that is away from the transmission gear assembly 40 is utilized.

The first pin assembly 81 and the second pin assembly 82 are respectively arranged on the two sides of the motor shaft 21 along a direction perpendicular to the direction along which the motor controller 30 and the transmission gear assembly 40 are arranged, so that space on the two sides of the motor shaft 21 along the direction can be used to implement the electrical connection between the first circuit board 31 and the signal terminal 102 and the electrical connection between the second circuit board 32 and the signal terminal 102.

The first circuit board 31 includes a first connection area, the first connection area is opposite to the first pin assembly 81 along the axial direction of the motor shaft 21, and the first pin assembly 81 is connected to the first connection area to implement the electrical connection to the first circuit board 31. Correspondingly, the second circuit board 32 includes a second connection area, the second connection area is opposite to the second pin assembly 82 along the axial direction of the motor shaft 21, and the second pin assembly 82 is connected to the second connection area to implement an electrical connection to the second circuit board 32. The first connection area and the second connection area are respectively arranged on the two sides of the motor shaft 21 along the direction perpendicular to the direction along which the motor controller 30 and the transmission gear assembly 40 are arranged.

This arrangement allows for a more compact arrangement of components in the accommodation cavity 11, and increases a spacing between the first pin assembly 81 and the second pin assembly 82, thereby avoiding signal interference between the first pin assembly 81 and the second pin assembly 82.

In an embodiment, the first circuit board 31 includes a plurality of control signal receptacles, the first pin assembly 81 is inserted into the plurality of control signal receptacles, and the first circuit board 31 is configured to transmit a control signal to the insertion terminal through the first pin assembly 81. In an embodiment, the plurality of control signal receptacles are located in the first connection area of the first circuit board 31.

In an embodiment, the second circuit board 32 includes a plurality of drive signal receptacles, the second pin assembly 82 is inserted into the plurality of drive signal receptacles, and the second circuit board 32 is configured to receive an external drive instruction through the second pin assembly 82. In an embodiment, the plurality of drive signal receptacles are located in the second connection area of the second circuit board 32.

In the foregoing two embodiments, the first circuit board 31 may be mainly configured to carry a component that is in the motor controller 30 and that is configured to implement a control function, and is electrically connected to the signal terminal 102 through the control signal receptacles and the first pin assembly 81. A trace between the first pin assembly 81 and the signal terminal 102 is mainly used to transmit a control signal of the motor controller 30. The second circuit board 32 may be mainly configured to carry a component that is in the motor controller 30 and that is configured to implement a driving function, and is electrically connected to the signal terminal 102 through the drive signal receptacles and the second pin assembly 82. A trace between the second pin assembly 82 and the signal terminal 102 is mainly used to transmit a drive signal of the motor controller 30.

Therefore, the control signal and the drive signal between the motor controller 30 and the signal terminal 102 may be separately routed, to avoid electromagnetic interference between the control signal and the drive signal, and ensure reliable implementation of functions of the motor controller 30.

In an embodiment, the plurality of bus capacitors 33 are fastened to the second circuit board 32, and the plurality of bus capacitors 33, the second pin assembly 82, and the signal terminal 102 are sequentially arranged. The plurality of bus capacitors 33 are configured to receive an external instruction through the second pin assembly 82 and the signal terminal 102. The plurality of bus capacitors 33 are arranged in an area close to the second pin assembly 82, so that a signal transmission distance of the plurality of bus capacitors 33 can be shortened.

In an embodiment, the second circuit board 32 includes a three-phase copper busbar receptacle, and a three-phase copper busbar of the brake motor 20 is configured to be inserted into the three-phase copper busbar receptacle. Along the axial direction of the motor shaft 21, the three-phase copper busbar receptacle runs through the second circuit board 32, and a length of the three-phase copper busbar is greater than a spacing between the second circuit board 32 and the stator 22. Along a circumferential direction of the motor shaft 21, the three-phase copper busbar receptacle is spaced from the bus capacitors 33, and three receptacles in the three-phase copper busbar receptacle are sequentially spaced apart.

In this embodiment, the second circuit board 32 is closer to the stator 22 of the brake motor 20 along the axial direction of the motor shaft 21, and the three-phase copper busbar of the brake motor 20 is configured to be inserted into the second circuit board 32 and receive the drive signal of the motor controller 30. The three-phase copper busbar is close to the bus capacitor 33 along the circumferential direction of the motor shaft 21, and three copper busbars in the three-phase copper busbar are spaced apart along the circumferential direction of the motor shaft 21. This can shorten a transmission path between the three-phase copper busbar and the bus capacitor 33, and make proper use of planar space of the second circuit board 32. As a result, a layout of the second circuit board 32 is more compact and a size of the electro-mechanical brake apparatus 100 provided in this application along the radial direction of the motor shaft 21 is reduced.

In an embodiment, the housing 10 is made of an insulation material, and the housing 10, the signal terminal 102, the first pin assembly 81, and the second pin assembly 82 are integrally formed. In this embodiment, the signal terminal 102, the first pin assembly 81, the second pin assembly 82, and traces for respective connections are all made of a metal material. The foregoing components made of the metal material may be embedded in the housing 10 made of the insulation material, and are integrally formed with the housing 10 through injection molding. This makes the structure of the electro-mechanical brake apparatus 100 more compact and facilitates assembly.

In an embodiment, the housing 10 completely wraps the trace between the signal terminal 102 and the first pin assembly 81, to provide reliable protection for the trace between the signal terminal 102 and the first pin assembly 81. In an embodiment, the trace between the signal terminal 102 and the first pin assembly 81 is fastened in a side plate 13 on a side of the housing 10.

In an embodiment, the housing 10 completely wraps the trace between the signal terminal 102 and the second pin assembly 82, to provide reliable protection for the trace between the signal terminal 102 and the second pin assembly 82. In an embodiment, the trace between the signal terminal 102 and the second pin assembly 82 is fastened in a side plate 13 on another side of the housing 10.

According to the foregoing two embodiments, the trace between the signal terminal 102 and the first pin assembly 81, and the trace between the signal terminal 102 and the second pin assembly 82 are respectively fastened to the side plates 13 on the two opposite sides of the housing 10, so that a spacing between the trace between the signal terminal 102 and the first pin assembly 81 and the trace between the signal terminal 102 and the second pin assembly 82 can be increased, thereby further avoiding electromagnetic interference between the two groups of traces.

In an embodiment, the side plate 13 in which the trace between the signal terminal 102 and the first pin assembly 81 is fastened and the side plate 13 in which the trace between the signal terminal 102 and the second pin assembly 82 is fastened are arranged opposite to each other along the direction perpendicular to the direction along which the motor controller 30 and the transmission gear assembly 40 are arranged.

In an embodiment, the housing 10 is connected to the cover plate 14 through a snap-fit 15, and a gap between the housing 10 and the cover plate 14 along the axial direction of the motor shaft 21 is filled with a sealant 16.

FIG. 19 is a cross-sectional view of a structure of the electro-mechanical brake apparatus 100 according to an embodiment of this application.

As shown in FIG. 19, in this embodiment, the housing 10 is fastened to the cover plate 14 through the snap-fit 15. The snap-fit 15 is provided on the side plate 13 or the cover plate 14. The connection structure between the housing 10 and the cover plate 14 eliminates a need for a separate fastener, making the connection structure between the housing 10 and the cover plate 14 relatively simple and facilitating miniaturization of the housing 10.

In an embodiment, a gap is left between the housing 10 and the cover plate 14 along the axial direction of the motor shaft 21, and the gap is filled the sealant 16. The sealant 16 may be used to enhance stability of the fixed connection between the housing 10 and the cover plate 14, and the sealant 16 may be further used to seal the accommodation cavity 11, to enhance reliable protection for the motor controller 30 and the transmission gear assembly 40.

In an embodiment, the base plate 12 and the housing 10 are an integrated structure. This can eliminate a need for a connection structure between the base plate 12 and the side plate 13, thereby facilitating miniaturization of the housing 10.

In an embodiment, the base plate 12 is also connected to the housing 10 through a snap-fit 15, and a gap between the base plate 12 and the housing 10 along the axial direction of the motor shaft 21 is filled with a sealant 16.

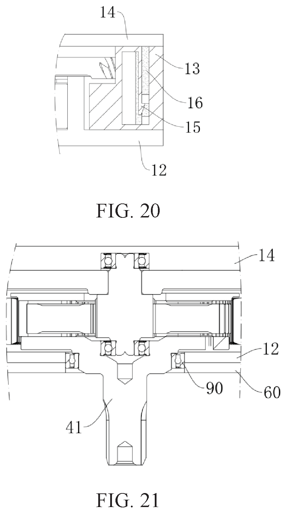

FIG. 20 is a cross-sectional view of a structure of the electro-mechanical brake apparatus 100 according to an embodiment of this application.

As shown in FIG. 20, in this embodiment, the base plate 12 is also fastened to the side plate 13 through the snap-fit 15. The snap-fit 15 is provided on the side plate 13 or the base plate 12. The connection structure between the base plate 12 and the side plate 13 also eliminates the need for a separate fastener, making the connection structure between the base plate 12 and the side plate 13 relatively simple and facilitating miniaturization of the housing 10.

In an embodiment, a gap is left between the base plate 12 and the side plate 13 along the axial direction of the motor shaft 21, and the gap is also filled with the sealant 16. The sealant 16 may be used to enhance stability of the fixed connection between the base plate 12 and the side plate 13, and the sealant 16 may be further used to seal the accommodation cavity 11, to enhance reliable protection for the motor controller 30 and the transmission gear assembly 40.

In the foregoing two embodiments, the base plate 12 and the side plate 13 in the housing 10 may be an integrated structure, or may be separately manufactured. When the base plate 12 and the side plate 13 are an integrated structure, the base plate 12 and the side plate 13 may be manufactured through integral injection molding, thereby simplifying a manufacturing process of the housing 10.

In an embodiment, the transmission gear assembly 40 includes an output shaft 41. The output shaft 41 is configured to: pass through the base plate 12 along the axial direction of the motor shaft 21, and extend into the caliper 60 to be in transmission connection with the screw nut 61. The output shaft 41 is configured to be fastened to an inner ring of a bearing 90. Along the axial direction of the motor shaft 21, a part of an outer ring of the bearing 90 is configured to be fastened to the base plate 12, and another part of the outer ring of the bearing 90 is configured to be fastened to the caliper 60.

FIG. 21 is a cross-sectional view of a structure of the electro-mechanical brake apparatus 100 according to an embodiment of this application.

In this embodiment, the bearing 90 is configured to support the output shaft 41 of the transmission gear assembly 40, to ensure reliable transmission of the braking force between the output shaft 41 and the screw nut 61. The output shaft 41 and the screw nut 61 are in transmission connection through the base plate 12 and a structure of the caliper 60. In the electro-mechanical brake apparatus 100 provided in this application, the base plate 12 and the caliper 60 work with each other to jointly fasten the bearing 90 configured to support the output shaft 41 of the transmission gear assembly 40. In this way, a wall thickness of the base plate 12 or the caliper 60 along the axial direction of the motor shaft 21 can be reduced, and the size of the electro-mechanical brake apparatus 100 can be further reduced.

In an embodiment, the base plate 12 and the caliper 60 are an integrated structure, and the base plate 12 fastened to the caliper 60, the side plate 13 of the housing 10, and the cover plate 14 enclose the accommodation cavity 11 in the electro-mechanical brake apparatus 100. In this embodiment, along the axial direction of the motor shaft 21, a surface that is of the caliper 60 and that faces the transmission gear assembly 40 is configured to be fastened to the side plate 13 of the housing 10, and is connected to the cover plate 14 through the side plate 13. This embodiment eliminates a need for a structure of a separate base plate 12, thereby further reducing an axial size of the electro-mechanical brake apparatus 100.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An electro-mechanical brake apparatus, wherein the electro-mechanical brake apparatus comprises a brake motor, a motor controller, a transmission gear assembly, and a brake pad, the brake motor, the motor controller, and the transmission gear assembly are arranged in different cavities of the electro-mechanical brake apparatus, the motor controller is configured to control a motor shaft of the brake motor to rotate, and the motor shaft is configured to drive, through the transmission gear assembly, the brake pad to apply braking;
along an axial direction of the motor shaft, the motor controller and the transmission gear assembly are arranged on a same side of a stator of the brake motor, the motor controller comprises a first circuit board and a second circuit board, the first circuit board is spaced from the motor shaft, and the second circuit board is arranged between the first circuit board and the stator; and
along a radial direction of the motor shaft, the first circuit board is spaced from the transmission gear assembly, and the second circuit board is spaced from the transmission gear assembly and the motor shaft.

2. The electro-mechanical brake apparatus according to claim 1, wherein the electro-mechanical brake apparatus comprises a housing and a cover plate, the housing and the cover plate enclose an accommodation cavity, and the accommodation cavity is configured to accommodate the motor controller and the transmission gear assembly;
the housing is configured to fasten a spacer, and the spacer is configured to divide the accommodation cavity into a cavity for the motor controller and a cavity for the transmission gear assembly; and
along the axial direction of the motor shaft, the stator, the second circuit board, the first circuit board, and the cover plate are sequentially spaced apart, and a section of the motor shaft is configured to extend into the cavity for the transmission gear assembly and is configured to be in transmission connection with the transmission gear assembly.

3. The electro-mechanical brake apparatus according to claim 2, wherein the spacer comprises a flange;
along the axial direction of the motor shaft, the flange is fastened in the accommodation cavity and extends toward the cover plate, and a middle part of the flange is configured to be fastened in a gap between the first circuit board and the motor shaft; and
along the radial direction of the motor shaft, an upper part of the flange is configured to be fastened in a gap between the first circuit board and the transmission gear assembly, and a lower part of the flange is configured to be fastened in a gap between the second circuit board and the motor shaft.

4. The electro-mechanical brake apparatus according to claim 3, wherein the upper part of the flange comprises an oil baffle;
along the axial direction of the motor shaft, the oil baffle is fastened to a side that is of the flange and that faces the cover plate; and
along the radial direction of the motor shaft, the oil baffle is in a U-shape, and a U-shaped notch of the oil baffle is oriented toward the transmission gear assembly.

5. The electro-mechanical brake apparatus according to any one of claims 2 to 4, wherein the electro-mechanical brake apparatus comprises a signal terminal, and the signal terminal is configured to electrically connect to each of the first circuit board and the second circuit board; and
the signal terminal is fastened to an outer surface of a side wall of the housing, and the first circuit board, the transmission gear assembly, and the signal terminal are sequentially spaced apart along the radial direction of the motor shaft.

6. The electro-mechanical brake apparatus according to claim 5, wherein a first pin assembly and a second pin assembly are fastened to a bottom wall of the accommodation cavity, the first pin assembly and the second pin assembly each extend along the axial direction of the motor shaft, the first pin assembly is configured to connect the first circuit board to the signal terminal, and the second pin assembly is configured to connect the second circuit board to the signal terminal;
along a direction perpendicular to a direction along which the first circuit board and the signal terminal are arranged, the first pin assembly and the second pin assembly are respectively arranged on two sides of the motor shaft; and
along the radial direction of the motor shaft, the first pin assembly is spaced from the second circuit board.

7. The electro-mechanical brake apparatus according to claim 6, wherein a plurality of bus capacitors are fastened to the second circuit board; along the axial direction of the motor shaft, the plurality of bus capacitors are located on a side that is of the second circuit board and that faces the first circuit board; and a height of the bus capacitor is greater than a spacing between the first circuit board and the second circuit board; and
along the radial direction of the motor shaft, the plurality of bus capacitors, the second pin assembly, and the signal terminal are sequentially arranged, and the plurality of bus capacitors are spaced from the first circuit board.

8. The electro-mechanical brake apparatus according to any one of claims 5 to 7, wherein the housing is made of an insulation material, and the housing, the signal terminal, the first pin assembly, and the second pin assembly are integrally formed.

9. The electro-mechanical brake apparatus according to any one of claims 2 to 8, wherein a magnetic ring is fastened to an end that is of the motor shaft and that faces the first circuit board, the magnetic ring extends into the cavity for the motor controller along the axial direction of the motor shaft, a sensing chip of a position sensor is fastened to the first circuit board, and a projection of the magnetic ring on the first circuit board partially overlaps with the sensing chip.

10. The electro-mechanical brake apparatus according to any one of claims 2 to 9, wherein the housing is connected to the cover plate through a snap-fit, and a gap between the housing and the cover plate along the axial direction of the motor shaft is filled with a sealant.

11. The electro-mechanical brake apparatus according to any one of claims 2 to 10, wherein the electro-mechanical brake apparatus comprises a base plate; and
the base plate and the housing are an integrated structure; or
the base plate is connected to the housing through a snap-fit, and a gap between the base plate and the housing along the axial direction of the motor shaft is filled with a sealant.

12. The electro-mechanical brake apparatus according to any one of claims 2 to 11, wherein the electro-mechanical brake apparatus comprises a caliper, the caliper is configured to accommodate a screw nut, the caliper is fastened to the base plate, and the transmission gear assembly is configured to drive the brake pad through the screw nut;
along the axial direction of the motor shaft, the caliper is located on a side that is of the housing and that faces the stator; and
along the radial direction of the motor shaft, the screw nut is spaced from the stator.

13. The electro-mechanical brake apparatus according to claim 12, wherein the base plate comprises an axially protruding structure, the axially protruding structure is configured to protrude away from the cover plate along the axial direction of the motor shaft, and an inner cavity of the axially protruding structure is configured to accommodate the stator and a rotor that are of the brake motor; or
the caliper comprises a motor accommodation cavity, and the motor accommodation cavity is configured to accommodate the stator and a rotor that are of the brake motor.

14. The electro-mechanical brake apparatus according to claim 12 or 13, wherein the transmission gear assembly comprises an output shaft; the output shaft is configured to: pass through the base plate along the axial direction of the motor shaft, and extend into the caliper to be in transmission connection with the screw nut; the output shaft is configured to be fastened to an inner ring of a bearing; and along the axial direction of the motor shaft, a part of an outer ring of the bearing is configured to be fastened to the base plate, and another part of the outer ring of the bearing is configured to be fastened to the caliper.

15. A vehicle, wherein the vehicle comprises a wheel and the electro-mechanical brake apparatus according to any one of claims 1 to 14, the electro-mechanical brake apparatus is fastened to a vehicle frame of the vehicle, and the electro-mechanical brake apparatus is configured to apply braking to a brake disc of the wheel.
